# EUROPEAN PATENT SPECIFICATION

(11) **EP 2 727 759 B1**
(45) Date of publication and mention of the grant of the patent: **14.01.2015**
(21) Application number: 12290381.8
(22) Date of filing: 05.11.2012
(51) Int. Cl.: B60L 11/18, G01B 7/00

(54) **A method and device for a vehicle assist system**
Verfahren und Vorrichtung für ein Fahrzeughilfssystem
Procédé et dispositif pour un système d'assistance de véhicule

(43) Date of publication of application: 07.05.2014
(73) Proprietor: ALCATEL LUCENT, 92100 Boulogne-Billancourt (FR)
(72) Inventor: Noack, Ferenc, 12353 Berlin (DE); Lange, Christian, 10385 Berlin (DE)
(74) Representative: Kröhnert, Michael

(56) References cited:
- WO-A1-2012/095896
- DE-A1-102009 041 483
- DE-A1-102010 012 356
- DE-A1-102011 015 980
- GB-A- 2 468 578
- JP-A- 2012 171 450
- US-A1- 2012 095 617

## Description

### Field of the invention

The invention relates to a method and a device for a vehicle assist system in particular a parking assist system or an inductive charging system.

### Background

Vehicle assist systems for assisting a driver of a vehicle to park the vehicle for example use ultrasound sensors to detect obstacles such as neighboring vehicles and guide the driver into a parking position. However, such systems do not indicate a target position with sufficient precision. Highly precise parking systems or inductive charging systems require a highly accurate positioning of the vehicle or the involved inductive charging coils relative to each other.

JP 2012 171 450 is considered as the closest prior art according to the preamble of claim 1.

### Summary

The object of the invention is thus to provide a device for a vehicle assist system and a method for such vehicle assist system having the precision for parking required in particular by an inductive charging systems. Furthermore an object is to assist in initiating the inductive charging when the position of the vehicle assisted is correct.

The main idea of the invention is to determine a target value for the vehicle assist system from information about a received signal transmitted between a sender and a receiver.

the information about the received signal is an indication of the strength of the signal. This way the precision required by the parking assist system or the inductive charging system can be reached easily. Furthermore cheap components such as radio frequency identification devices can be used to implement the system.

the indication of the strengths of the received signal is compared to a predetermined reference value. This way it is possible to determine the reference values once for example during production of a vehicle, the parking assist system or the inductive charging system and reuse predetermined reference values. This reduces cost of manufacture and increases the flexibility.

the predetermined reference value is determined depending on an identification of the sender or receiver of the signal. This allows distinction between different senders or receivers and therefore increases the precision.

Advantageously a number of signals received is compared to a predetermined number. This increases robustness in particular when several signals are received.

Advantageously the target value is determined depending on the result of the comparison of the indication of the strength of the received signal to the predetermined reference value or the number of signals received to the predetermined number. This provides for a reliable and robust solution.

Advantageously the target value is suitable to control the direction indicated by a parking assist system or to control an inductive charging system. This way the target values can be used directly by parking assist systems or inductive charging systems. This makes integration of the inductive charging system much simpler.

Further developments of the invention can be gathered from the dependant claims, the method claims and the following description.

### Brief description of the figures

In the following the invention will be explained further making reference to the attached drawings.
Figure 1 schematically shows an embodiment of a device for a vehicle assist system.
Figure 2 schematically shows another embodiment of a device for a vehicle assist system.
Figure 3 schematically shows part of a vehicle.
Figure 4 schematically shows a part of a vehicle assist system.
Figure 5 schematically shows a part of a vehicle assist system.
Figure 6 schematically shows a vehicle and a part of a vehicle assist system.
Figure 7 schematically shows a flow chart of part of a method.
Figure 8 schematically shows a flow chart of part of a method.

### Description of the embodiments

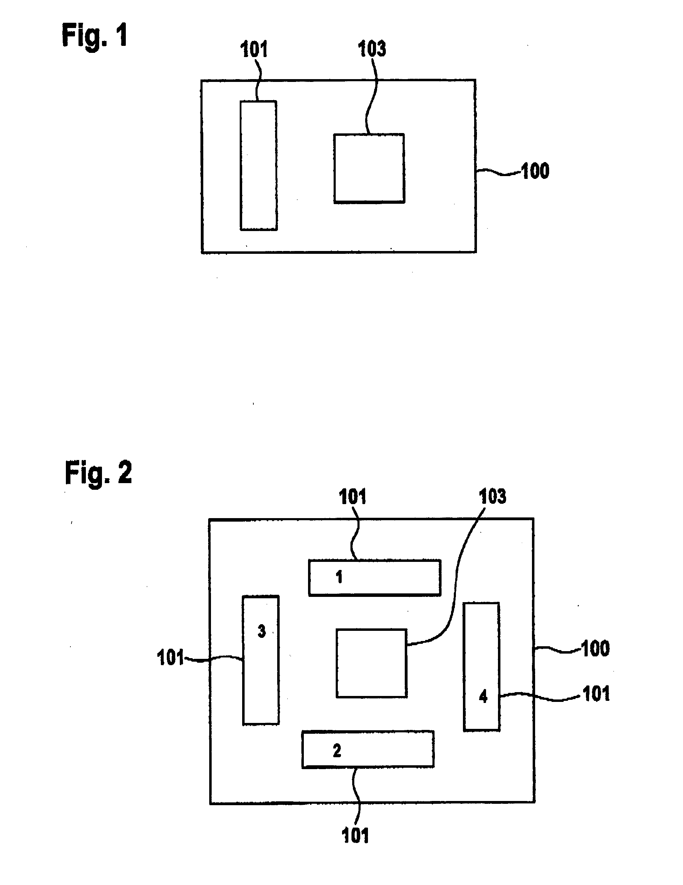

Figure 1 shows a device 100 for a vehicle assist system according to a first embodiment. The device 100 according to the first embodiment comprises a processor 103 and a first receiver 101 adapted to receive a signal.

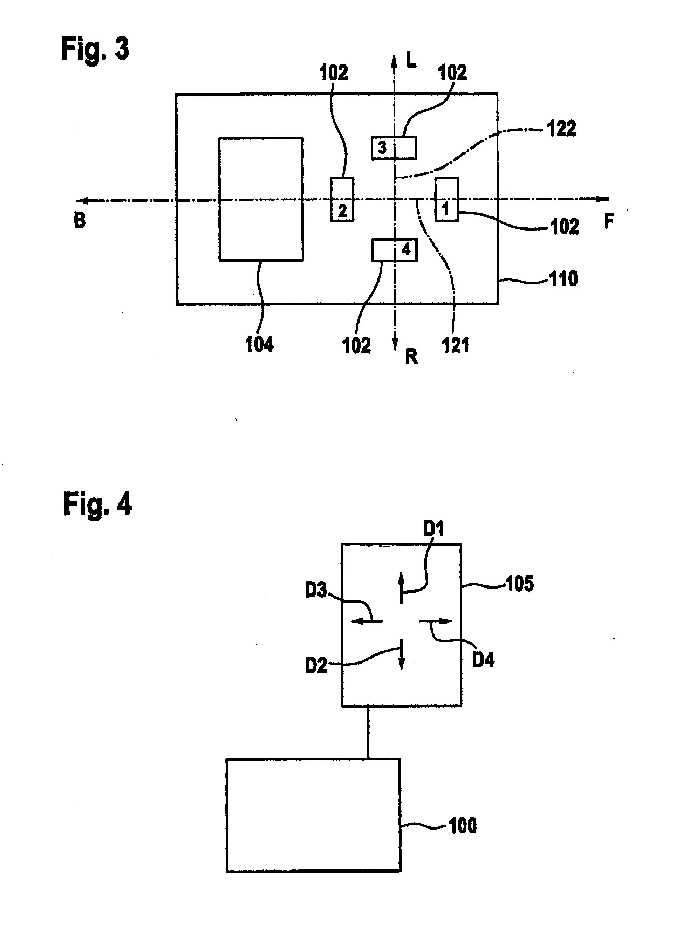

Figure 3 depicts part of a vehicle 110. According to the first embodiment the vehicle 110 comprises four first senders 102. According to the first embodiment one or more first senders 102 are identifiable by a preferably unique identification. In the example the identification for the individual first sender 102 is a number 1, 2, 3, 4 and the first senders 102 are adapted to send the respective identification in the signal.

Furthermore the first receiver 101 is adapted to determine from any received signal the information about the first sender 102 having sent the received signal and to send additional information about the sending first sender 102 to the processor 103. Alternatively the processor 103 is adapted to determine the identification of the sending first sender 102 for each received signal. This way the first sender 102 is identifiable by the identification for each received signal.

Figure 2 depicts a device 100 according to a second embodiment. According to the second embodiment the device 100 comprises the processor 103 and four first receivers 101. The first receivers 101 are identifiable by a preferably unique identification. In the example the identification for the individual first receiver is depicted in Figure 2 as numbers 1, 2, 3, and 4. Furthermore the first receivers 101 are adapted to modify any received signal to add information about the receiver 101 having received the signal, or to send additional information about the receiving first receiver 101 to the processor 103. Alternatively the processor 103 is adapted to determine the identification of the receiving first receiver 101 for each received signal. This way the first receiver 101 is identifiable by the identification for each received signal.

According to the first embodiment, the device 100 is adapted to be mounted at a road infrastructure and the four first senders 102 are mounted to the vehicle 110.

According to the second embodiment, the device 100 is adapted to be mounted at the road infrastructure and at least one sender 102 is mounted to the vehicle 110.

According to a third embodiment not depicted, the device 100 according to the first embodiment is mountable to the vehicle 110 and the at least one first sender 102 is mounted to the road infrastructure.

According to a fourth embodiment not depicted, the device 100 according to the second embodiment is mountable to the vehicle 110 and the at least one first sender 102 is mounted to the road infrastructure.

The first senders 102 are either active sender sending the signal for example at predetermined time intervals. For example the first sender 102 send a beacon signal every 10 milliseconds. In this case the first receivers 101 may be passive receivers. Alternatively the first senders 102 comprise an oscillating circuit adapted to respond with the signal upon receipt of a suitable signal. In this case the suitable signal is sent by a second sender not depicted. The second sender may be either part of the device 100 or external to the device 100. Preferably the first receiver 101 is designed as a transceiver comprising the first receiver 101 and the second sender. In any case the second sender is adapted to send the activation signal at another predetermined time interval, e.g. every 5 milliseconds. Furthermore in case a second sender is used, the first sender 102 and a second receiver not depicted are adapted to act together in order to send the signal upon receipt of the activation signal by the second receiver. Preferably the first sender 102 is designed as a transceiver comprising the first sender 102 and the second receiver. In any case the first sender 102 is adapted to send the signal upon receipt of the activation signal by the second receiver.

For example the first senders 102, the second sender, the first receivers 101 and the second receiver are radio frequency identification signal senders and receivers respectively. In this case the signal sent or received is a radio frequency identification signal in one of the well known radio frequency identification frequency bands. Furthermore the identification of the first sender 102 in this case is the radio frequency identification of the corresponding first sender 102.

Preferably a passive radio frequency identification tag is used as the first sender 102. In this case the second sender is adapted to send the suitable activation signal to activate the radio frequency identification tags within range of the second sender or the first receiver 101. In this case the second receiver is adapted to receive the activation signal. Furthermore the oscillating circuit of the radio frequency identification tag is manufactured to comprise the identification of the first sender 102 and send the signal including the information about the identification upon receipt of the activation signal by the second receiver.

Any other type of identification or any other type of signal may be used as well. For example a wireless local area network signal according to the well known IEEE 802.11 standard may be used.

According to all embodiments for example the processor 103 is adapted to determine a target value for the vehicle assist system from information about a received signal transmitted between the sender and the receiver. In particular the information about the received signal may be an indication of the strength of the signal. For example the well known radio signal strengths indication method may be used by the processor 103 to determine the strength of the signal received. According to an example the radio signal strengths indication is for example a value between 0 and 255, e.g. depending on ratio of the received signal strengths to a predetermined maximum signal strength. According to this example the radio signal strengths indication 0 indicates that no signal is received. According to this example increasing values of the radio signal strengths indication indicate a stronger signal with 255 indicating that the received signal is the same as the predetermined maximum signal strength, i.e. the ratio is 1. The signal strength received is for example determined by the first receiver 101 in Watt and the predetermined maximum strength is stored in the device 100. For example the predetermined maximum strength is the nominal transmission power of the sender in Watt. The ratio and the indication of the strength are in this example determined by the processor 103 from this information.

Furthermore the processor 103 is adapted to compare the indication of the strength of the received signal to a predetermined reference value. The predetermined reference value according to an example is a value between 0 and 255, stored in the device 100.

Furthermore the processor is adapted to determine the predetermined reference value depending on the identification of the first sender 102 or the first receiver 101 of the received signal. For example the numbers 1, 2, 3 and 4 identifying the signal also identify the first sender 102 or the first receiver 101 of the received signal. To that end the identification is either determined by the processor 103 from the signal or received from the first receiver 101 as described above. In the example of radio frequency identification signals for example the radio frequency identification is used as the identification.

Furthermore the processor 103 is adapted to look up the predetermined reference value in a database. To that end the predetermined reference value is stored and linked to the identification of the respective first sender 102 or first receiver 101 in the database. The predetermined reference value or a particular identification is for example determined in a calibration. A calibration is for example performed by placing the first receiver 101 and the first sender 102 at a predetermined position with respect to each other and measuring the signal strengths of the signal transmitted between the first sender 102 and the first receiver 101. In the predetermined position, depending on whether four first senders 102 or four first receivers 101 are used, the signal strength varies, e.g. due to the distance between the respective first senders 102 and the first receivers 101. In the calibration preferably the position of the vehicle 110, in particular of a first charging coil 104 mounted to the vehicle 110, relative to the road infrastructure, in particular a second charging coil mounted to the road infrastructure is selected so that the first charging coil 104 is aligned with the second charging coil to provide an electromagnetic field for most efficient inductive charging, e.g. with minimal loss of energy. This position depends on the mounting position of the device 100, in particular the first receivers 101 or the one or more first senders 102 relative to the first or second charging coil or vice versa. A calibration method for example comprises of one or multiple repetitions of the following steps in any order:
- parking the vehicle 110 at the appropriate position relative to the road infrastructure, e.g. so that the first charging coil 104 is aligned with the second charging coil,
- sending by a first sender 102 the signal with a predetermined strength, e.g. 10 mW,
- receiving the signal,
- determining the strength of the received signal by measurement, e.g. 2 mW,
- determine the identification of either the first sender 102 or the first receiver 101 for the received signal, e.g. 2,
- determining the indication of the signal strength from the received signal and the predetermined strength, e.g. according to the following calculation: 255*2mW/10mW = 51,
- storing the indication of the signal strength as predetermined reference value in the database linked to the identification of the first sender 102 or the first receiver 101, e.g. as data pair (51, 2).

The device 100 may furthermore be adapted to compare a number of signals received to a predetermined number. To that end the processor 103 counts the number of signals received having different identifications. Furthermore according to the example the predetermined number is a value between 0 and 3. In the example of four identifiable first senders 102 or four first receivers 101 the number of signals received from different senders or received by different receivers cannot exceed four. In case the number of signals received from different senders or receivers is four, all of the first receivers 101 either received a signal or a signal sent by all four first senders 102 is received. In case the number of signals is less than four not all of the first receivers 101 received a signal or not all of the signals sent by the first sender 102 are received. This is used by the processor 103 as an indication for the fact that either one of the four first receivers 101 is out of range of the first sender 102, or one or more of the four first senders 102 is out of range of the first receiver 101. This way an indication of the relative position of the first sender 102 and the first receiver 101 is determined, depending on the mounting position of the respective sender or receiver without comparison to the predetermined reference value. The mounting position is in this case stored in a database of the device 100. For example the mounting position of the four first senders 102 or the four first receivers 101 relative to an origin of a coordinate system is stored. In this case the processor 103 is adapted to determine the relative position of the respective senders or receivers by a geometric calculation. For example the respective orientation and distance of individual first receivers 101 from individual first senders 102 is determined assuming radial signal propagation from the first sender 102.

Furthermore the processor 103 is adapted to determine the target value depending on the result of the comparison of either the number of signals received to the predetermined numbers and/or the indication of the strengths of the received signal to the predetermined reference value.

Furthermore the target value is suitable to control the direction indicated by a parking assist system or to control an inductive charging system.

A method for a vehicle assist system in particular determining a target value for the vehicle assist system from information about the received signal transmitted between the first sender 102 and the first receiver 101 is explained below making reference to figures 3 to 8.

The method is described according to the first embodiment, i.e. the device 100 is mounted to the road infrastructure and comprises the first receiver 101 and the vehicle 110 comprises four first senders 102.

Figure 3 schematically depicts part of the vehicle 110. According Figure 3 the vehicle 110 comprises an inductive charging system with a first inductive charging coil 104. The first inductive charging coil 104 is connected to a battery charging System not depicted in Figure 3. The inductive charging system is adapted to charge the battery via the first inductive charging coil 104 when the first inductive charging coil 104 is exposed to a suitable electromagnetic field.

Furthermore according to this embodiment four first senders 102 are mounted to the vehicle 110. The four first senders 102 are preferably mounted near the underbody of the vehicle 110 facing downward towards the road when the vehicle on the road. According to this embodiment the four first senders 102 are installed in a plane that is essentially parallel to the underbody and hence to the road when the vehicle 110 is on the road.

The mounting position of the four first senders 102 is in this embodiment selected as depicted in Figure 3. Considering a first axis 121 and a second axis 122 intersecting rectangular in an origin the four first senders 102 are for example mounted within the same distance from the origin so that one of the four first senders 102 is mounted on both sides of the origin on each of the axis 121 and 122.

The alignment of the four first senders 102 may be different. For example the distance of the individual senders to the origin may differ. Furthermore instead of rectangular intersecting axis 121 and 122 any other angle may be selected. According to the example the first axis 121 is aligned to be parallel to the underbody of the vehicle 110 pointing from the rear end of the vehicle to the front of the vehicle essentially following the center line of the vehicle 110 as depicted in Figure 3. Any other alignment of the first axis 121 may be selected likewise. For example the axis 121 may be diagonally to the rectangle symbolizing the vehicle 110 in Figure 3. Likewise the second axis 122 may be at any angle to the first axis 121 and hence rotated respective to the vehicle 110 as well.

According to the example four first senders 102 are used. This is a preferred embodiment however any other number of first senders 102 may be mounted to the vehicle 110. In particular one, two, three or more than four first senders 102 may be used. In case more than one first sender 102 is used preferably different mounting positions for the individual first senders 102 are selected.

According to the embodiment the first inductive coil 104 and the four first senders 102 are mounted at different positions on the vehicle 110. The displacement between the first inductive charging coil 104 and the four first senders 102 may be selected freely. Preferably the first inductive charging coil 104 and the four first senders 102 are mounted so that the origin, this means the intersection of the first axis 121 and the second axis 122, is located in the center of the first inductive charging coil 104.

As depicted in Figure 3 the first axis 121 runs along the center line of the vehicle from the back of the vehicle to the front of the vehicle 110. The front of the vehicle is indicated in Figure 3 by an arrow labeled F. The arrow F also indicates the forward driving direction of the vehicle 110. The rear of the vehicle 110 is indicated in Figure 3 as an arrow labeled B. This also indicates the rearward driving direction. Likewise the left and right side of the vehicle are indicated by respective arrows labeled L and R. The arrows labeled L and R also indicate the driving direction left and right of the vehicle 110 respectively.

The first axis 121 and the second axis 122 and hence the mounting position of the four first senders 102 may be rotated with respect to the vehicle's driving directions. In this case the first axis 121 is at an angle regarding the arrow F indicating the forward driving direction likewise the second axis 122 may be at an angle to the left and right driving direction as well.

Figure 4 depicts part of the vehicle assist system. The vehicle assist system comprises of the device 100 and a display 105. The display 105 is connectable to the device 100 via a data or signal link. The display 105 is adapted to display a target driving direction depending on the target value determined by the device 100. For example the driving directions are indicated as four arrows labeled D1, D2, D3 and D4 in Figure 4. In this case for example the target value to display the arrows labeled D1, D2, D3 and D4 is D1, D2, D3 and D4 respectively. The arrows may be generated as an image on the display 105. Any other kind of displaying methods may be used such as light emitting diodes. Additionally or alternatively the display 105 comprises loudspeaker and the directions are indicated sound output of the target driving directions.

According to the embodiment the arrow labeled D1 symbolizes the forward driving direction. Furthermore the arrow labeled D2 symbolizes rearward driving direction. Likewise the arrows labeled D3 and D4 symbolize the left and right driving direction respectively. This is for example either visible from the mounting position of the display 105 with respect to the vehicle 110 or explicitly labeled on the display 105.

The display 105 is adapted to indicate the driving direction by showing the arrow indicated in the target value. According to the example one or more arrows may be displayed at the same time. For example in case the target value (D1, D3) indicates that the arrow D1 and D3 shall be displayed, the arrows labeled D1 and D3 are displayed. This gives the driver the indication to drive forward and left at the same time. Any other type of display of the driving direction may be used as well. In particular the driving direction may be indicated by an arrow pointing exactly at the driving direction.

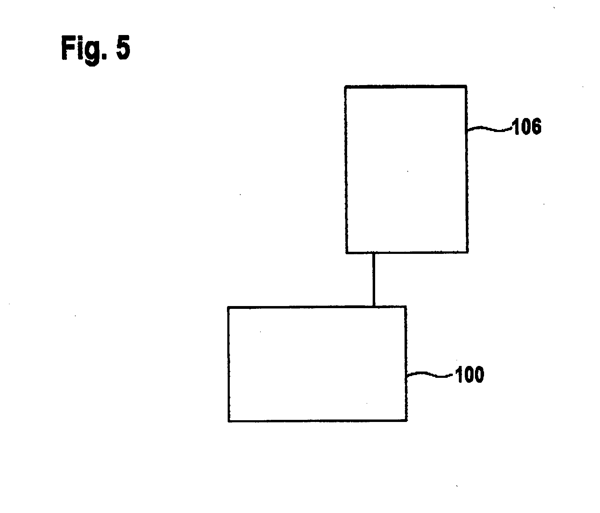

Figure 5 shows part of a vehicle assist system in particular an inductive charging circuit 106 and the device 100. The device 100 and the inductive charging circuit 106 are connectable via a signal or data link. The inductive charging circuit 106 is adapted to connect to or disconnect from a power supply. In the example the inductive charging circuit 106 is designed as a primary coil generating an electromagnetic field suitable for charging a matching secondary coil. In the example this secondary coil is the first charging coil 104 depicted in Figure 3. The inductive charging circuit 106 comprises a second inductive charging coil not depicted in Figure 5. The second inductive charging coil is suitable to charge the vehicle 110 via the first inductive charging coil 104 when the vehicle is parked at a position in which the first inductive coil 104 and the second inductive coil are aligned. The alignment in this context means that the relative position of the charging coils is so that an effective electromagnetic energy transfer is possible. The inductive charging circuit 106 is adapted to connect the second charging coil to the power supply in case the target value determined by the device 100 indicates that the charging coils are aligned. For example the target value for charging is either "yes" or "no". This means that the device 100 is adapted to determine the target value to be "yes" in case the two coils are aligned and to the value of "no" in case the two coils are not aligned.

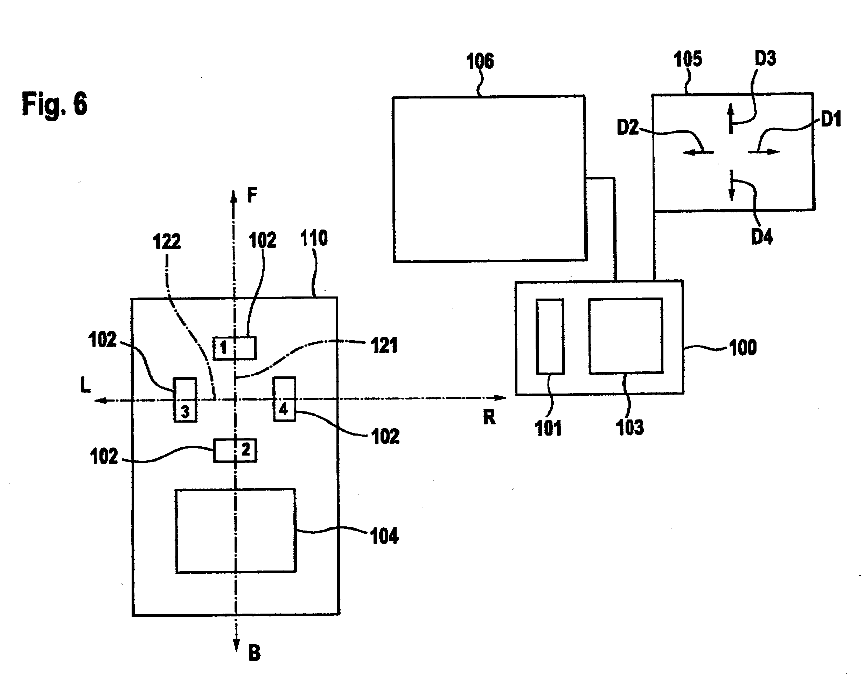

Figure 6 schematically depicts the vehicle 110 and the vehicle assist system comprising the device 100 the display 105 and the inductive charging circuit 106. According to the example the device 100 comprises the processor 103 and the first receiver 101. Furthermore the vehicle 110 comprises the four first senders 102 labeled with identifications 1, 2, 3, 4. The identifications 1, 2, 3, 4 also indicate the mounting position relative to the origin, i.e. the forward the backward the left and the right driving direction respectively.

This information and the distance from the origin may be stored in the device 100 during the aforementioned calibration.

Furthermore the display 105 is adapted to display the driving direction with the arrows D1, D2, D3, D4 for the forward the rearward the left and the right driving direction respectively.

Furthermore the inductive charging circuit 106 is adapted to connect or disconnect the second charging coil to the power supply not depicted. Additionally the first inductive charging coil 104 is adapted to charge the battery of the vehicle 110 when electromagnetic energy is received from the second inductive charging coil.

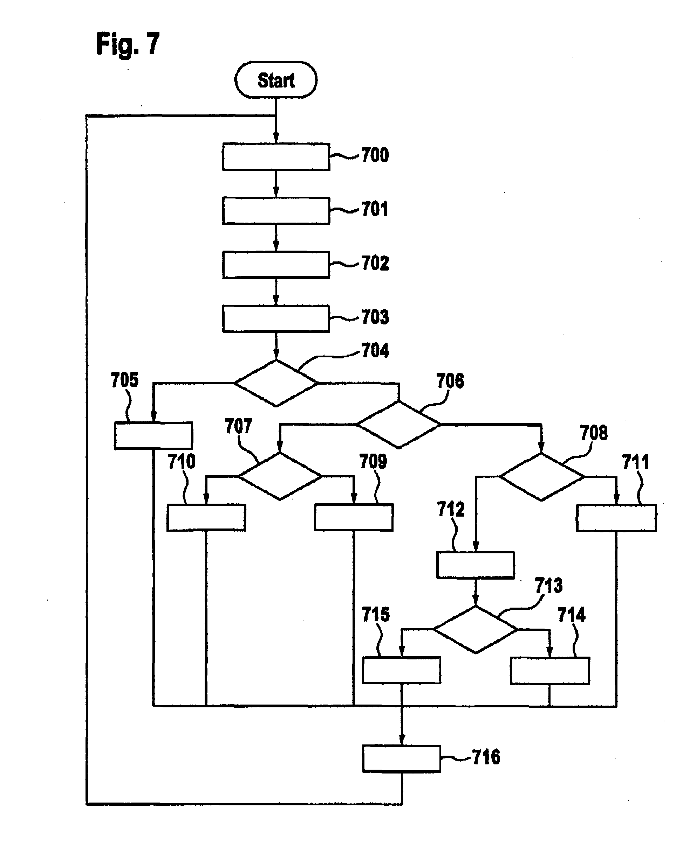

A part of the method for the vehicle assist system is explained now making reference to Figure 7. The method for example starts whenever the device 100 is turned on. After the start a step 700 is executed.

In step 700 the indication of the signal strength is determined for each signal received by the first receiver 101. For example the received signal strength is determined as described above. Afterwards a step 701 is executed.

In step 701 the identification of the sender of the signal is determined for each received signal. For example the radio frequency identification is determined from each received signal. This means that in case a signal is received from the first sender 102 with the identification 1 the determined identification of the sender is 1. Similarly the identification for signals from any other first sender 102 is determined. Step 701 may comprise a wait loop to ensure all available signals are received.

Afterwards a step 702 is executed.

In step 702 the number of signals received having different identification is determined. This means that in case only the signal from one of the four first senders 102 is received the number of signals received is 1. Likewise and in case several signals are received from the same of the four first senders 102 the number does not increase. This way it is easily determined if only one of the first antennas 102 two, three or all four of the second antennas 102 are within the range of the first antenna 101.

Afterwards a step 703 is executed.

In step 703 the predetermined reference value linked to the identification is looked up for example in a database comprised in the device 100 for each of the received signals. To that end predetermined reference values are for example stored during production of the device 100 in the database. The database may be any type of storage.

The reference values are for example determined in the calibration as described above by placing a vehicle 110 at exactly the best position for inductive charging. This means that the position of the vehicle 110 is placed so that the coils are aligned for best energy transfer via the inductive charging coils. In this position the first receiver 101 and the four first senders 102 are at a defined distance from each other. As depicted in Figure 6 the first antenna 101 is mounted at a certain distance to the inductive charging circuit 106 and hence to the second charging coil. Likewise the four first senders 102 are mounted to the vehicle 110 at a certain distance from the first inductive charging coil 104. Alternatively the first receiver 101 may be located in the center of the second inductive charging coil and/or the four first senders 102 may be located with the origin in the center of the first inductive charging coil 104. In that case the alignment of the inductive charging coils would lead to a position of the first receiver 101 essentially in the origin, i.e. the section point of the first axis 121 and the second axis 122. In any case the predetermined reference values for each of the second antennas 102 is determined as a value indicative of the strengths of the signal transmitted between the first antenna 101 and the respective second antenna 102. For example the radio signal strengths indication is determined by the processor 103 from the signal received from the individual antennas 102 as a value between 0 and 255. This value is then stored during calibration as predetermined reference value linked to the identification of the respective second antenna 102 in the database. The calibration may be part of the method and may be triggered whenever the device 100 detects that no reference values are stored. The display 105 may be adapted to display a text, e.g. calibration, in that case as information for the driver of the vehicle 110.

Afterwards a step 704 is executed.

In 704 the number of signals received is compared to a first of three predetermined numbers. In the example four first senders 102 are used. This means that the predetermined number is 1, 2, or 3. In case more than four first senders 102 are used the predetermined number may be higher. In case for example N first senders 102 are used the predetermined number may be a value between 1 and N - 1. The first predetermined number in the example is 1. The second and third predetermined numbers are 2 and 3 respectively.

This way in step 704 a test is performed to compare the number of signals received to the first predetermined number to determine if only one signal is received. In case only one signal is received a step 705 is executed otherwise a step 706 is executed.

In step 705 the target value for the direction is determined according to the following table:

**Table 1**

| Identification | D1 | D2 | D3 | D4 |
|---|---|---|---|---|
| 1 | x | | | |
| 2 | | x | | |
| 3 | | | x | |
| 4 | | | | x |

This means that the target value for the direction is set to move towards the direction of the first sender 102 sending the received signal.

The target value for charging is set to "no".

Afterwards a step 716 is executed.

In step 706 a test is performed to compare the number of signals received to the second predetermined number to test if only two signals are received. In case only two signals are received the step 707 is executed. Otherwise step 708 is executed.

In step 707 a test is performed to determine whether the received signals are sent from first senders 102 of the same axis 121 or 122. This means according to the example of Figure 3, in case the received signals are sent from the first senders 102 with the identification 1 or 2 they are on the same axis 121. Likewise in the example in case the received signals are sent by the first senders 102 with the identification 3 and 4 they are on the same axis 122. In case the received signals are from first senders 102 on the same axis a step 709 is executed otherwise a step 710 is executed.

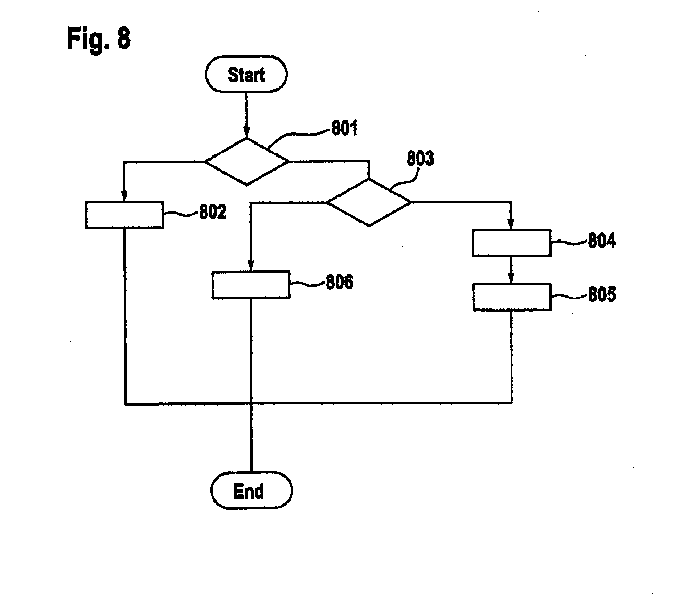

In step 709 the target value for the direction is calculated by a position calculation routine explained later referencing Figure 8.

Furthermore the target value for charging is set to "no".

Afterwards a step 716 is executed.

In step 710 the target value for the direction is determined according to the following table:

**Table 2**

| Identification | D1 | D2 | D3 | D4 |
|---|---|---|---|---|
| 1,3 | x | | x | |
| 1,4 | x | | | x |
| 2,3 | | x | x | |
| 2,4 | | x | | x |

This means that the target value for the direction is determined to move towards the direction of the first senders 102 sending the received signal.

The target value for charging is set to "no".

Afterwards a step 716 is executed.

In step 708 a test is performed to compare the amount of signals received to the third predetermined number to determine if only 3 signals are received. In case only 3 signals are received a step 711 is executed otherwise a step 712 is executed.

In case N first senders 102 are used, the tests described in steps 704, 706 and 708 are applied likewise until N-1 test have been performed.

In step 711 the target value for the direction is determined for the first senders 102 located on the same axis by the position calculation routine explained later referencing Figure 8. Furthermore for the signal received from the first sender 102 not on the same axis the target value for the direction is determined as described in step 705 using table 1.

Afterwards the target values of table 1 and the target value that results from the position calculation routine are combined. According to the example the target value for the direction in this case is set to one of D1, D3; D1, D4; D2, D3; D2, D4 in case the vehicle 110 shall be moved in more than one driving direction. In case the result of the position calculation routine indicates that the position of the vehicle along the axis is already sufficiently aligned, the target value for the direction is determined only by the result of the calculation according to step 705 using table 1. This means that in this case the target value for the direction is set to move towards the direction of the first sender 102 not on the same axis as the other two first senders 102.

Furthermore the target value for charging is set to "no".

Afterwards a step 716 is executed.

In step 712 the position calculation routine is used twice for each of the axis 121, 122 with the respective first senders 102. As in step 711 the target value for the direction is determined depending on the result of the position calculation routine to be one of D1, D3; D1, D4; D2, D3; D2, D4 in case movement in more than one direction is required. Otherwise in case the position calculation routine determines for both axis 121, 122 that the vehicle is already perfectly aligned the target value for the direction is set to an empty value indicating that no movement is required. Furthermore the target value for the direction is set to only one direction D1, D2, D3 or D4 in case movement is only required into one of the directions. Afterwards a step 713 is executed.

In step 713 a test is performed to determine if the indication of the signal strengths is larger or equal to the respective predetermined reference value for each of the first senders 102 respectively. In case the indication of the signal strengths is larger or equal to the respective predetermined reference value a step 714 is executed. Otherwise a step 715 is executed.

In step 714 the target value for charging is set to "yes". Afterwards a step 716 is executed.

In step 715 the target value for charging is set to "no". Afterwards a step 716 is executed.

In step 716 the target value suitable to control the direction indicated by the parking assist system or to control the inductive charging circuit is issued. For example the target value for charging and the target value for the direction are sent. Alternatively the determined target values may be transformed into control signals suitable to control the display 105 and inductive charging circuit 106 respectively. For example the target value charging "no" is transformed into a signal disconnecting the inductive charging circuit 106 from the power supply. Likewise the target value for charging "yes" is transformed into a signal to connect the inductive charging circuit 106 to the power supply. Any type of signal like an electronic signal to engage or disengage a switch may be used.

Likewise in order to control the display 105 the direction indications D1 D2, D3 or D4 are transformed to control the direction to be indicated by the display 105. For example electronic signals are used to light up the light emitting diodes corresponding to the direction indication.

Afterwards the step 700 is executed.

The position calculation routine mentioned above is now explained making reference to Figure 8.

After the start a step 801 is executed.

In step 801 a test is performed to determine whether both indications of signal strengths are larger than or equal to the respective reference value. In case both indications of the signal strengths are larger than the respective reference value step 802 is executed. Otherwise a step 803 is executed.

In step 802 the target value for the direction on the axis is set to an empty value. This indicates that the position of the vehicle 110 along the respective axis is aligned well enough for inductive power transfer. In this case the position calculation routine ends and returns the empty target value for the direction.

In step 803 a test is performed to determine if both indications of the signal strengths are smaller than the respective reference value. In case both indications are smaller than the respective reference value a step 804 is executed otherwise a step 806 is executed.

In step 804 the difference between the indication of the signal strengths and the reference value is determined. The difference between the indication of the signal strengths and the reference value for the first sender 102 with the identification 1 is labeled dl. Likewise the other differences are labeled d2, d3 and d4 for the first senders 102 with the identification 2, 3 and 4 respectively. Afterwards a step 805 is executed.

In step 805 the target value for the direction is determined according to the following table:

**Table 3**

| Signal strengths relation | D1 | D2 | D3 | D4 |
|---|---|---|---|---|
| d1 > d2 | | x | | |
| d1 < d2 | x | | | |
| d3 > d4 | | | | x |
| d3 < d4 | | | x | |
| d1 = d2 | | | | |
| d3 = d4 | | | | |

This way the direction information is determined depending on the difference between the indication of the signal strengths and the predetermined reference values.

Assuming 200 and 100 as the predetermined reference values for the second antennas 102 with the identification 1 and 2 and an indication of the signal strength of the received signals of 75 and 25 for the first senders 102 with the identification 1 and 2 respectively this means that the first sender 102 with the identification 1 is closer to the first receiver 101 as the first sender 102 with the identification 2. Furthermore this means that the difference between the indication of the signal strengths of the received signal and the respective predetermined reference value indicates that the distance of the first sender 102 with the identification 1 to the best position for charging the vehicle inductively is 200 - 75 = 125 and thus larger than the distance of the first sender 102 with the identification 2 that is at 100 - 25 = 75. In this case according to table 3 the target value for the direction indicates to drive in the direction D2.

Afterwards the position calculation routine ends and returns the target value for the direction.

In step 806 the target value for the direction is determined according to the following table:

**Table 4**

| Identification | D1 | D2 | D3 | D4 |
|---|---|---|---|---|
| 1 | | x | | |
| 2 | x | | | |
| 3 | | | | x |
| 4 | | | x | |

The identification in Table 4 is the identification of the sender of the received signal that has a signal strength smaller than the predetermined reference value.

The target value for the direction is set to the respective information about the direction depending on the identification of the signal that has a smaller value than the predetermined reference value. Afterwards the position calculation routine ends and returns to target value for the direction.

The method was described above for an embodiment having the device 100 with first receiver 101 and the processor 103. In this example the vehicle 110 comprises four first senders 102 with the different identifications 1, 2, 3 and 4. In an implementation of the embodiment for example radio frequency identification tags may be used for the first senders 102. In this case the radio frequency identification resembles the identification 1, 2, 3 and 4 of the respective first senders 102. Furthermore in this case the first receiver 101 is adapted to receive the radio frequency signals and the identification from the first senders 102. Furthermore the processor 103 is adapted to determine the radio frequency identification from the signals. This means that in this case the identification is the identification of the sender of the signal.

The method applies likewise to the other embodiment of the invention.

For example the device 100 comprises according to the second embodiment four first receivers 101 and the processor 103 as depicted in Figure 2. According to this example the vehicle 110 may be equipped with one first sender 102.

In the examples active or passive radio frequency identification antennas may be used. In particular this means that according to the examples it is not essential whether the device 100 installed on the vehicle 110 or at the road infrastructure. In case the device 100 is installed on the vehicle 110 the entire vehicle assist system may be installed on the vehicle. In case the display 105 is not installed on the vehicle 110 an additional data link between the device 100 mounted on the vehicle and the display 105 may be provided in order to transmit the target value for the direction.

Furthermore in this case an additional data link may be provided between the device 100 and the inductive charging system 106 in order to transfer the target value determined by the device 100 for charging to the inductive charging system 106 in order to initiate the inductive charging when the aforementioned method is executed.

To this end the device 100 may comprise of the required interface for example a wireless local area network interface according to the well known IEEE 802.11 standard.

To trigger sending of the signal between the first sender 102 and the first receiver 101 the transceivers of the third and fourth embodiment may be used to send a request in an additional step of the method, e.g. before step 700. For example in case radio frequency identification tags are used as the first senders 102 the second sender may be adapted to send the request to trigger the radio frequency identification tag in this additional step. In another additional step in this case the second receiver may receive the request and the first sender 102 is adapted to respond by sending the signal preferably comprising the identification of the radio frequency identification tag upon receipt of this request by the second receiver.

Optionally at any time during the aforementioned methods the charging may be disrupted whenever the battery of the vehicle 110 is fully charged or when the displacement of the two inductive charging coils exceeds a maximum value. To that end the method described above may comprise an additional step to detect either that the battery is fully charged or that the displacement of the inductive charging coils is too large. In order to detect the displacement for example the target value for the direction may be monitored and the displacement may be detected whenever the target value for the direction is not empty anymore. Furthermore to detect that the battery is fully charged the battery stages or energy flow wire inductive charging circuit may be monitored.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts represent various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A device (100) for a vehicle assist system, **comprising** a processor (103) adapted to determine (705, 709, 710, 711, 714, 715) a target value for the vehicle assist system from information about a received signal transmitted between a sender (102) and a receiver (101), wherein the information about the received signal is an indication of the strength of the signal, wherein the processor (103) is adapted to compare (801, 803) the indication of the strength of the received signal to a predetermined reference value, **characterized in that** the processor (103) is adapted to determine (701, 703) the predetermined reference value depending on an identification of the sender or receiver of the received signal.

2. The device (100) according to any of the aforementioned claims, wherein the processor (103) is adapted to compare (704, 706, 708) a number of signals received to a predetermined number.

3. The device (100) according to claim 1 to 2, wherein the processor (103) is adapted to determine the target value depending on the result of the comparison.

4. The device (100) according to any of the aforementioned claims, wherein the target value is suitable to control the direction indicated by a parking assist system or to control an inductive charging system.

5. A vehicle **comprising** a device (100) according to claims 1 to 4.

6. A method for a vehicle assist system, **comprising** determining (705, 709, 710, 711, 714, 715) a target value for the vehicle assist system from information about a received signal transmitted between a sender (102) and a receiver (101), wherein the information about the received signal is an indication of the strength of the signal, comprising comparing (801, 803) the indication of the strength of the received signal to a predetermined reference value **characterized by** determining (701, 703) the predetermined reference value depending on an identification of the sender or receiver of the signal.

7. The method according to claim 6, comprising comparing (704, 706, 708) a number of signals received to a predetermined number.

8. The method according to claims 6 to 7, wherein the target value is determined depending on the result of the comparison.

9. The method according to any of the aforementioned claims, wherein the target value is suitable to control the direction indicated by a parking assist system or to control an inductive charging system.

## Patentansprüche

1. Vorrichtung (100) für ein Fahrzeughilfssystem, **umfassend** einen Prozessor (103), welcher dazu ausgelegt ist, ausgehend von einer Information über ein empfangenes, zwischen einem Sender (102) und einem Empfänger (101) übertragenes Signal einen Sollwert für das Fahrzeughilfssystem zu bestimmen (705, 709, 710, 711, 714, 715), wobei die Information über das empfangene Signal eine Angabe der Stärke des Signals ist, wobei der Prozessor (103) dazu ausgelegt ist, die Angabe über die Stärke des Signals des empfangenen Signals mit einem vorbestimmten Referenzwert zu vergleichen (801, 803), **dadurch gekennzeichnet, dass** der Prozessor (103) dazu ausgelegt ist, den vorbestimmten Referenzwert in Abhängigkeit von einer Identifikation des Senders oder des Empfängers des empfangenen Signals zu bestimmen (701, 703).

2. Vorrichtung (100) nach dem vorstehend aufgeführten Anspruch, wobei der Prozessor (103) dazu ausgelegt ist, eine Anzahl von empfangenen Signalen mit einer vorbestimmten Anzahl zu vergleichen (704, 706, 708).

3. Vorrichtung (100) nach Anspruch 1 bis 2, wobei der Prozessor (103) dazu ausgelegt ist, den Sollwert in Abhängigkeit vom Ergebnis des Vergleiches zu bestimmen.

4. Vorrichtung (100) nach einem beliebigen der vorstehend aufgeführten Ansprüche, wobei der Sollwert dazu geeignet ist, die von einem Parkhilfesystem angegebene Richtung zu steuern oder ein induktives Ladesystem zu steuern.

5. Fahrzeug, **umfassend** eine Vorrichtung (100) gemäß den Ansprüchen 1 bis 4.

6. Verfahren für ein Fahrzeughilfssystem, **umfassend** das Bestimmen (705, 709, 710, 711, 714, 715), ausgehend von einer Information über ein empfangenes, zwischen einem Sender (102) und einem Empfänger (101) übertragenes Signal, eines Sollwerts für das Fahrzeughilfssystem, wobei die Information über das empfangene Signal eine Angabe der Stärke des Signals ist, umfassend das Vergleichen (801, 803) der Angabe über die Stärke des Signals des empfangenen Signals mit einem vorbestimmten Referenzwert, **gekennzeichnet durch** das Bestimmen (701, 703) des vorbestimmten Referenzwerts in Abhängigkeit von einer Identifikation des Senders oder des Empfängers des Signals.

7. Verfahren nach Anspruch 6, umfassend das Vergleichen (704, 706, 708) einer Anzahl von empfangenen Signalen mit einer vorbestimmten Anzahl.

8. Verfahren nach den Ansprüchen 6 bis 7, wobei der Sollwert in Abhängigkeit von dem Ergebnis des Vergleiches bestimmt wird.

9. Verfahren nach einem beliebigen der Ansprüche 6 bis 8, wobei der Sollwert dazu geeignet ist, die von einem Parkhilfesystem angegebene Richtung zu steuern oder ein induktives Ladesystem zu steuern.

## Revendications

1. Dispositif (100) pour un système d'assistance de véhicule, comprenant un processeur (103) adapté pour déterminer (705, 709, 710, 711, 714, 715) une valeur cible pour le système d'assistance de véhicule à partir d'informations sur un signal reçu transmis entre un expéditeur (120) et un destinataire (101), dans lequel les informations sur le signal reçu sont une indication de la puissance du signal, dans lequel le processeur (103) est adapté pour comparer (801, 803) l'indication de la puissance du signal reçu à une valeur de référence prédéterminée, **caractérisé en ce que** le processeur (103) est adapté pour déterminer (701, 703) la valeur de référence prédéterminée en fonction d'une identification de l'expéditeur ou du destinataire du signal reçu.

2. Dispositif (100) selon la revendication 1, dans lequel le processeur (103) est adapté pour comparer (704, 706, 708) un nombre de signaux reçus à un nombre prédéterminé.

3. Dispositif (100) selon la revendication 1 ou 2, dans lequel le processeur (103) est adapté pour déterminer la valeur cible en fonction du résultat de la comparaison.

4. Dispositif (100) selon l'une quelconque des revendications susmentionnées, dans lequel la valeur cible est adaptée pour commander la direction indiquée par un système d'aide au stationnement ou pour commander un système de recharge par induction.

5. Véhicule **comprenant** un dispositif (100) selon les revendications 1 à 4.

6. Procédé pour un système d'assistance de véhicule, **comprenant** la détermination (705, 709, 710, 711, 714, 715) d'une valeur cible pour le système d'assistance de véhicule à partir d'informations sur un signal reçu transmis entre un expéditeur (102) et un destinataire (101), dans lequel les informations sur le signal reçu sont une indication de la puissance du signal, comprenant la comparaison (801, 803) de l'indication de la puissance du signal reçu à une valeur de référence prédéterminée, **caractérisé par** la détermination (701, 703) de la valeur de référence prédéterminée en fonction d'une identification de l'expéditeur ou du destinataire du signal.

7. Procédé selon la revendication 6, comprenant la comparaison (704, 706, 708) d'un nombre de signaux reçus à un nombre prédéterminé.

8. Procédé selon les revendications 6 et 7, dans lequel la valeur cible est déterminée en fonction du résultat de la comparaison.

9. Procédé selon l'une quelconque des revendications 6 à 8, dans lequel la valeur cible est adaptée pour commander la direction indiquée par un système d'aide au stationnement ou pour commander un système de recharge par induction.
